# EUROPÄISCHE PATENTSCHRIFT

(11) **EP 2 191 188 B1**
(45) Veröffentlichungstag und Bekanntmachung des Hinweises auf die Patenterteilung: **11.01.2012**
(21) Anmeldenummer: 08785287.7
(22) Anmeldetag: 01.08.2008
(51) Int. Cl.: F16L 55/165, F16L 55/179

(54) **VERFAHREN ZUM SANIEREN VON ABZWEIGLEITUNGEN IN KANALROHREN**
METHOD FOR RECONSTRUCTING BRANCH LINES IN SEWER PIPES
PROCEDE DE RENOVATION DE CONDUITES DE DERIVATION DANS DES CANALISATIONS

(30) Priorität: 14.08.2007 DE 102007038196
(43) Veröffentlichungstag der Anmeldung: 02.06.2010
(73) Patentinhaber: Noll, Christian, 67117 Limburgerhof (DE)
(72) Erfinder: NOLL, Christian, 67117 Limburgerhof (DE); REICHEL, Stefan, 67098 Bad Dürkheim (DE)
(74) Vertreter: Langfinger, Klaus Dieter
(86) Internationale Anmeldenummer: PCT/EP2008/006346
(87) Internationale Veröffentlichungsnummer: WO 2009/021645

(56) Entgegenhaltungen:
- EP-A1- 1 591 470
- EP-A1- 1 959 183
- JP-A- 2004 092 818
- JP-A- 2007 030 237
- TW-U- M 315 805
- US-B1- 6 580 228

## Beschreibung

Die Erfindung betrifft ein Verfahren zum Sanieren von undichten Wänden an Abzweigleitungen von Kanalrohren, insbesondere von Hausanschlussleitungen, mit einem an die Innenwand der Leitung anpressbaren, mit einem lichthärtbaren Kunstharz getränkten Faserschlauch.

Ein derartiges Verfahren ist z.B. in EP-A 740 102, EP-A 1 785 659 und EP-A 1 798 462 beschrieben. Danach wird ein oben offener, flexibler Faserschlauch, der an seinem unteren Ende einen an die Innenwand des Hauptkanals anzulegenden Kragen aufweist - nachfolgend auch als "Hutprofil" bezeichnet - mit Hilfe eines Kanalroboters in den Hauptkanal und von dort in die Abzweigleitung eingeführt. Im Innern des Hutprofils befindet sich ein aufblasbarer Gummiträger, z.B. aus transparentem Silikongummi, der die Form eines umgekehrten T aufweist und oben aus dem Hutprofil herausragt. Sobald das Hutprofil seine endgültige Position erreicht hat, wird der Gummiträger aufgeblasen und das Hutprofil schmiegt sich dicht an die Innenwand der Abzweigleitung an. Danach wird eine UV- Strahlenquelle in den Hauptkanal eingeführt. Diese wird nun angeschaltet, wodurch das lichthärtbare Harz gehärtet wird. Nach beendeter Härtung wird der Gummiträger wieder herausgezogen.

Nachteilig an diesem bekannten Verfahren ist es, dass die UV- Lampen eine verhältnismäßig große Wärmemenge entwickeln, so dass die dadurch entstehende hohe Temperatur, insbesondere bei Abzweigleitungen mit kleinen Rohrdurchmessern, den an der Innenseite des Faserschlauches befindlichen Gummiträger schädigen kann. Dies kann zu Verklebungen und zu Versprödungen führen, wodurch die Gummiblase platzen kann. Außerdem sind die in dem Hauptkanal befindlichen UV- Lampen nur über kurze Strecken bis maximal etwa 25 cm wirksam, so dass Hutprofile, die weiter in die Abzweigleitung hineinragen sollen, mit UV- Lampen nicht gehärtet werden können.

Weiterhin ist es aus der EP-A 1 591 470 und JP200492818 bekannt, LEDs zum Sanieren von Rohrleitungen einzusetzen, ohne dass hierbei nähere Angaben über die Art und den Einsatz der LEDs gemacht werden. Insbesondere gibt die EP-A1591470 auch keinen Hinweis darauf, harzgetränkte Faserschläuche in Abzweigleitungen von Kanalrohren mit Hilfe von LEDs zu bestrahlen.

Demgemäß ist es eine Aufgabe der Erfindung, die zuvor erwähnten Nachteile des Standes der Technik zu vermeiden und ein technisch brauchbares Verfahren zur Sanierung von Abzweigleitungen von Kanalrohren bereitzustellen.

Diese Aufgabe wird erfindungsgemäß durch die Merkmale von Anspruch 1 gelöst. Weitere Merkmale der Erfindung sind in den Unteransprüchen enthalten.

Die erfindungsgemäße Lösung sieht vor, dass die Aushärtung des mit einem lichthärtbaren Reaktionsharz getränkten Faserschlauches in Abzweigleitungen von Kanalrohren durch Licht emittierende Dioden (LEDs) vorgenommen wird.

LEDs erzeugen hierbei bekanntermaßen ein kaltes Licht, sodass bei der Bestrahlung nur geringe Wärmemengen abgegeben werden. Ein weiterer Vorteil von LEDs besteht darin, dass sich die Wellenlänge des von einer LED- Lichtquelle erzeugten Lichts im Gegensatz zu UV- Gasentladungslampen erheblich exakter auf die für die Zersetzung der im lichthärtbaren Harz enthaltenen Photoinitiatoren benötigten Wellenlängen einstellen lässt. Außerdem ist die Strahlungseffizienz wesentlich höher als bei UV- Lichtquellen. Geeignet sind auch organische Licht emittierende Dioden, die mitunter auch als "OLED" bezeichnet werden.

Die Dioden sind auf einem flexiblen, rohrförmigen Träger angeordnet, der beispielsweise aus biegsamem Kunststoff, wie Polypropylen oder Polyamid oder aus Gummi bestehen kann. Auch spiralförmige Träger sind geeignet, die in sich flexibel sind und z.B. aus Stahlblech bestehen können. Spiralförmige Träger haben den Vorteil, dass je nach dem Durchmesser der Abzweigleitung, der Durchmesser des Trägers durch Aufweiten der Spiralwindungen veränderbar ist. Dadurch, dass der Träger flexibel ist, kann er durch z.B. geeignete Kanalroboter auf einfache Weise vom Hauptkanal aus in die Abzweigleitung eingeführt werden.

Bei einer weiteren bevorzugten Ausführungsform sind die Dioden auf gelenkig miteinander verbundenen und gegebenenfalls voneinander lösbaren Rohrsegmenten angebracht, wodurch eine besonders hohe Flexibilität erhalten wird. Derartige Träger können "wurmartig" auch in gebogene, enge Abzweigleitungen eingeführt werden. Besonders günstig ist es, wenn das Trägermaterial aus einem gut Wärme leitenden Metall, z.B. Aluminium besteht. Diese Materialien haben den Vorteil, dass sie die von den Dioden abgestrahlte Wärme aufnehmen und ableiten können. Sonst besteht nämlich die Gefahr, dass die Leistung und die Lebensdauer der LEDs im Lauf der Zeit abnimmt. Eine noch bessere Wärmeableitung kann dadurch erzielt werden, dass man um die Diode herum Kühlkörper mit z.B. ringfächerförmiger Geometrie anbringt.

Besonders günstig ist es, wenn die Dioden auf dem rohrförmigen bzw. spiralförmigen Träger in mehreren parallelen, ringförmigen bzw. wendelartigen Bereichen angeordnet sind, wobei die Dioden auf den jeweiligen Bereichen bevorzugt horizontal und/oder in Umfangsrichtung gegeneinander versetzt sind. Auf diese Weise wird erreicht, dass sich die Streuwinkel der einzelnen Dioden (die an sich bei jeder Diode allein betrachtet verhältnismäßig gering sind) überlappen, wodurch eine gleichmäßige Aushärtung des Faserschlauches gewährleistet wird.

Zudem lässt sich durch den Versatz der Dioden, bzw. der Diodenreihen zueinander die Flächendichte der Dioden auf dem Träger gewünschtenfalls in vorteilhafter Weise erhöhen, wodurch sich der Träger insgesamt verkürzen lässt. Anders ausgedrückt, lassen sich mehr Dioden auf einem Träger vorgegebener Länge zur Erhöhung der Leuchtdichte unterbringen.

Der Durchmesser der rohrförmigen bzw. spiralförmigen Träger richtet sich bevorzugt nach dem Durchmesser der zu sanierenden Abzweigleitung. Er kann zwischen 1 und 50 cm vorzugsweise zwischen 5 und 30 cm liegen. Die Zahl der Dioden auf einem Bereich richtet sich ebenfalls nach dem Durchmesser der Abzweigleitung. Sie wird bevorzugt so groß gewählt, dass eine ausreichende Überlappung der Streuwinkel der Dioden gewährleistet ist. Insgesamt können, je nach Länge des Trägers, z.B. 1 bis 500, vorzugsweise 10 bis 100 Dioden auf einem Träger angebracht sein.

Zum Sanieren der Abzweigleitung wird - wie in den zuvor zitierten Druckschriften beschrieben - ein Hutprofil zusammen mit einem für UV-Licht transparenten Gummiträger in die Leitung eingeführt und der Gummiträger aufgeblasen, so dass sich das Hutprofil an die Innenwand der Abzweigleitung anschmiegt. Dabei kann die Verbindung zwischen dem Hutprofil und der Innenwand der Leitung durch Klebemittel, z.B. auf Basis von Epoxid- oder Polyurethanharzen unterstützt werden. Der rohr-oder spiralförmige Träger mit den darauf angeordneten Dioden ist im Innern des aufblasbaren Gummiträgers an diesem befestigt und wird mit diesem zusammen durch den Luftdruck beim Aufblasen des Gummiträgers in die Abzweigleitung hinein befördert.

Wenn das ganze System installiert ist, können die Dioden eingeschaltet werden, um die Härtung durchzuführen. Nach beendeter Härtung wird der Träger mit den Dioden zusammen mit dem aufblasbaren Gummiträger herausgezogen.

Das erfindungsgemäße Verfahren hat den Vorteil, dass infolge der geringen Wärmeentwicklung durch die Dioden der für das UV-Licht durchlässige aufblasbare Gummiträger nicht geschädigt wird. Außerdem können beliebig lange, z.B. einige Meter lange Faserschläuche in die Abzweigleitung eingeführt und ausgehärtet werden, so dass Abzweigleitungen mehr als 25 cm tief - in machen Fällen sogar bis zum Hausanschluss - saniert werden können.

## Patentansprüche

1. Verfahren zum Sanieren von undichten Wänden an Abzweigleitungen von Kanalrohren, mit einem an die Innenwand der Abzweigleitung anpressbaren, mit einem lichthärtbaren Reaktionsharz getränkten flexiblen Faserschlauch, wobei die Aushärtung des Harzes durch Licht emittierende Dioden (LEDs) vorgenommen wird, die auf einem flexiblen rohrförmigen oder spiralförmigen Träger angeordnet sind, wobei
der in die Abzweigleitung einzuführende Faserschlauch oben offen ist und an seinem unteren Ende einen an die Innenwand des Hauptkanalrohrs anzulegenden Kragen in Form eines Hutprofils aufweist, wobei im Innern des Hutprofils ein aufblasbarer Gummiträger vorgesehen ist, der beim Aufblasen bewirkt, dass sich das Hutprofil dicht an die Innenwand der Abzweigleitung anschmiegt, **dadurch gekennzeichnet, dass** der flexible Träger mit den Dioden im Innern des Gummiträgers angebracht ist und mit diesem zusammen in die Abzweigleitung eingezogen wird.

2. Verfahren nach Anspruch 1,
**dadurch gekennzeichnet, dass**
der rohrförmige Träger aus einer Vielzahl von gelenkig miteinander verbundenen Rohrsegmenten besteht.

3. Verfahren nach Anspruch 1,
**dadurch gekennzeichnet, dass**
die Dioden auf dem Träger in mehreren parallelen, ringförmigen oder wendelartigen Bereichen angeordnet sind, wobei die Dioden auf dem jeweiligen Bereich horizontal oder umfänglich gegeneinander versetzt sind.

4. Verfahren nach Anspruch 1,
**dadurch gekennzeichnet,dass**
der Träger aus einem gut Wärme leitenden Metall, vorzugsweise aus Aluminium besteht.

5. Verfahren nach Anspruch 1,
**dadurch gekennzeichnet, dass**
die Dioden von Kühlkörpern umgeben sind.

## Claims

1. Method for reconstructing leaking walls in branch lines of sewer pipes having a flexible fiber hose impregnated with a light-hardening reaction resin, which hose can be pressed against the interior wall of the branch line, wherein the hardening of the resin is carried out by means of light emitting diodes (LEDs) which are arranged on a flexible tubular or spiral carrier, wherein
the fiber hose to be introduced into the branch line is open at the top and has at its lower end a collar to be placed against the interior wall of the main sewer pipe, said collar having the shape of a hat profile, in the interior of the hat profile an inflatable rubber carrier is provided, which on being inflated causes the hat profile to fit tightly against the interior wall of the branch pipe,
**characterized in that**
the flexible carrier with the diodes is mounted in the interior of the rubber carrier and pulled into the branch line together with said rubber carrier.

2. Method according to claim 1,
**characterized in that**
the tubular carrier consists of a plurality of pipe segments articulately connected with each other.

3. Method according to claim 1,
**characterized in that**
the diodes on the carrier are arranged in multiple parallel, annular or helical zones, wherein the diodes on each respective zone are offset in relation to each other horizontally or circumferentially.

4. Method according to claim 1,
**characterized in that**
the carrier consists of a metal with good thermal conductivity, preferably of aluminum.

5. Method according to claim 1,
**characterized in that**
the diodes are surrounded by heat sinks.

## Revendications

1. Procédé d'assainissement de parois non étanches sur des conduites de dérivation de canalisations, avec un tuyau en fibre flexible pouvant être pressé sur la paroi interne de la conduite de dérivation et humecté avec une résine de réaction photodurcissable, le durcissement de la résine étant effectué par des diodes émettrices de lumières (LED) qui sont disposées sur un support tubulaire ou spiralé flexible,
le tuyau en fibre devant être introduit dans la conduite de dérivation est ouvert en haut et présente à son extrémité inférieure un col en forme de profil de chapeau devant être posé sur la paroi interne de la canalisation principale, en ce que, à l'intérieur du profil de chapeau, il est prévu un support en caoutchouc gonflable qui, lors du gonflage, a pour effet que le profil de chapeau se presse de façon étanche sur la paroi interne de la conduite de dérivation,
**caractérisé en ce que**
le support flexible avec les diodes est placé à l'intérieur du support en caoutchouc et est introduit avec celui-ci dans la conduite de dérivation.

2. Procédé selon la revendication 1,
**caractérisé en ce que**
le support tubulaire se compose d'une multiplicité de segments de tube raccordés les uns aux autres de façon articulée.

3. Procédé selon la revendication 1,
**caractérisé en ce que**
les diodes sur le support sont disposées dans plusieurs zones parallèles, annulaires ou en hélice, les diodes étant décalées sur la zone respective de façon horizontale ou circonférentielle les unes par rapport aux autres.

4. Procédé selon la revendication 1,
**caractérisé en ce que**
le support est composé d'un métal conduisant bien la chaleur, de préférence en aluminium.

5. Procédé selon la revendication 1,
**caractérisé en ce que**
les diodes sont entourées de dissipateurs de chaleur.
